# EUROPÄISCHE PATENTSCHRIFT

(11) **EP 2 614 336 B1**
(45) Veröffentlichungstag und Bekanntmachung des Hinweises auf die Patenterteilung: **29.11.2017**
(21) Anmeldenummer: 11754377.7
(22) Anmeldetag: 06.09.2011
(51) Int. Cl.: G01C 21/34

(54) **NAVIGATIONSSYSTEM UND VERFAHREN ZUM BERECHNEN VON GESAMTKOSTEN EINER ROUTE**
NAVIGATION SYSTEM AND METHOD FOR COMPUTING OVERALL COSTS OF A ROUTE
SYSTÈME DE NAVIGATION ET PROCÉDÉ DE CALCUL DU COÛT TOTAL D'UN ITINÉRAIRE

(30) Priorität: 10.09.2010 DE 102010040587
(43) Veröffentlichungstag der Anmeldung: 17.07.2013
(73) Patentinhaber: Bayerische Motoren Werke Aktiengesellschaft, 80809 München (DE)
(72) Erfinder: TAVA, Marcello, 81369 München (DE)
(86) Internationale Anmeldenummer: PCT/EP2011/065387
(87) Internationale Veröffentlichungsnummer: WO 2012/032042

(56) Entgegenhaltungen:
- DE-A1- 10 242 125
- DE-A1- 19 716 354
- US-A1- 2006 069 501
- US-B1- 6 256 579

## Beschreibung

Die Erfindung betrifft ein Navigationssystem und ein Verfahren zum Berechnen von Gesamtkosten einer Route, beispielsweise im Rahmen der Bestimmung einer günstigen oder optimalen Route.

Mit Navigationssystemen ist es möglich, basierend auf einer digitalen Straßenkarte nach verschiedenen Kriterien optimierte Routen zwischen einem Startpunkt und einem Zielpunkt zu berechnen. Dazu ist es vorgeschlagen, einzelnen digitalisierten Straßenabschnitten Kostenwerte (beispielsweise Fahrzeit, Fahrstrecke, Energieverbrauch, etc. oder beliebige darauf basierende Kombinationen) zuzuordnen und eine Route mit geringen oder minimalen Gesamtkosten zu bestimmen.

Die derart automatisch bestimmte Route weicht insbesondere am Start- und Zielpunkt häufig von der Route ab, die ein Nutzer aufgrund seiner besonderen Ortskenntnisse wählen würde oder tatsächlich wählt.

Aus der DE19716354A1 ist ein Navigationssystem für ein Fahrzeug bekannt, bei dem für das Fahrzeug eine nahegelegene Straße ausgewählt wird für den Fall, dass die augenblickliche Position in der Nähe eines registrierten Ortes liegt.

Aus der US6256579B1 ist ein Navigationssystem bekannt, bei dem eine Routensuche auf einer Koeffizienten-Tabelle beruht.

Der Erfindung liegt nun die Aufgabe zugrunde, eine gegenüber dem Stand der Technik verbesserte technische Lehre anzugeben.

Diese Aufgabe wird durch die Merkmale der unabhängigen Ansprüche gelöst. Vorteilhafte Weiterbildungen der Erfindung sind den abhängigen Ansprüchen zu entnehmen. Im Rahmen der Erfindung liegen auch Weiterbildungen des Anspruchs 7 , die den von Anspruch 1 abhängigen Ansprüchen entsprechen.

Ein erfindungsgemäßes Navigationssystem umfasst eine Schnittstelle zum Zugriff auf eine Speichereinrichtung, auf welcher eine elektronische Straßenkarte mit einer Vielzahl von Straßenabschnitten, denen jeweils zumindest ein erstes Kostenelement zugeordnet ist, abgespeichert ist.

Eine Rechnereinrichtung, wie beispielsweise eine programmgesteuerte Prozessoreinrichtung, ist derart ausgeführt oder eingerichtet, dass zumindest einem Teil der Straßenabschnitte zumindest ein zweites Kostenelement zuordenbar ist, zugeordnet ist oder zugeordnet wird.

Zur Berechnung einer Route ist oder wird Straßenabschnitten jeweils ein Kostenwert zugeordnet. Die Berechnung (Bestimmung) eines Kostenwertes oder ein Kostenwert für erste Straßenabschnitte basiert jeweils auf dem ersten und dem zweiten Kostenelement. Die Berechnung (Bestimmung) eines Kostenwertes oder ein Kostenwert für zweite Straßenabschnitte basiert jeweils auf dem ersten und nicht auf dem zweiten Kostenelement, insbesondere unabhängig davon, ob für die zweiten Straßenabschnitte ein zweiter Kostenwert existiert oder nicht.

Die Anzahl der ersten Straßenabschnitte oder das Verhältnis der Anzahl der ersten Straßenabschnitte zur Anzahl der zweiten Straßenabschnitte wird von Route zu Route abhängig von der Rechnereinrichtungsauslastung variiert. Ist die aktuelle Auslastung der Rechnereinrichtung gering, da beispielsweise die Route kurz ist oder andere (beispielsweise navigationsunabhängige) durch die Rechnereinrichtung ausgeführte Prozesse aktuell relativ wenig Rechenleistung erfordern, so kann die Anzahl der Straßenabschnitte, für deren Kostenwert zweite Kostenelemente berücksichtigt werden, erhöht werden und/oder umgekehrt.

Dadurch wird erreicht, dass zur Berechnung einer Route bestimmten Straßenabschnitten, die beispielsweise in der Nähe von Start- oder Zielort liegen, flexibel und dynamisch Kostenwerte zugeordnet werden können, die zweite Kostenelemente berücksichtigen. Durch zweite Kostenelemente können beispielsweise persönliche Fahrgewohnheiten eines Nutzers oder Routenpräferenzen eines Nutzers berücksichtigt werden. Diese zweiten Kostenelemente sind dabei vorzugsweise nicht als Teil der elektronischen Straßenkarte abgespeichert oder auf dem gleichen Speichermedium wie die elektronische Straßenkarte abgespeichert. Mit der Erfindung wird vermieden, dass für alle Straßenabschnitte zweite Kostenelemente berücksichtigt werden müssen, da dies bei langen Routen zu einer erhöhten Rechenzeit für die Routenberechnung führt.

Der Begriff "Straßenabschnitt" umfasst auch ein Datenobjekt, das einen Straßenabschnitt beschreibt.

Erste Kostenelemente können beispielsweise auf der Fahrzeit, der Fahrstrecke oder der Fahrgeschwindigkeit des entsprechenden Straßenabschnittes basieren. Neben ersten Kostenelementen können natürlich dritte oder weitere Kostenelemente vorgesehen sein und berücksichtigt werden.

Kostenelemente, insbesondere zweite Kostenelemente, können auch negativ sein. Beispielsweise wird einem Straßenabschnitt bei jedem Befahren ein negativer Wert als zweites Kostenelement zugeordnet.

Basiert ein Kostenwert nur auf einem ersten Kostenelement, so kann der Kostenwert beispielsweise durch das erste Kostenelement bestimmt sein. Basiert ein Kostenwert auf einem ersten und einem zweiten Kostenelement, so kann der Kostenwert beispielsweise durch eine Summe des ersten und zweiten Kostenelementes bestimmt sein.

Zweite Kostenelemente können jeweils startortabhängig, fahrzielabhängig, wochentagabhängig, fahrerabhängig und/oder tageszeitabhängig abgespeichert sein oder werden und/oder können jeweils startortabhängig, fahrzielabhängig, wochentagabhängig, fahrerabhängig und/oder tageszeitabhängig zur Berechnung von Kostenwerten verwendet werden.

Die erste Speichereinrichtung kann beispielsweise ein optisches Wechselspeichermedium, eine Festplatte oder ein Speicher einer zentralen Servereinrichtung, auf welche das Navigationssystem über Mobilfunk zugreifen kann, sein.

Im Rahmen der Erfindung liegt auch ein Verfahren zum Berechnen von Gesamtkosten einer Route, bei dem den die Route bestimmenden Straßenabschnitten jeweils ein erstes und zumindest teilweise jeweils ein zweites Kostenelement zugeordnet ist, bei dem den Straßenabschnitten jeweils ein Kostenwert zugeordnet ist oder wird, wobei die Berechnung des Kostenwertes für erste Straßenabschnitte jeweils auf einem ersten und einem zweiten Kostenelement basiert und für zweite Straßenabschnitte jeweils auf dem ersten und nicht auf dem zweiten Kostenelement basiert, und bei dem die Gesamtkosten der Route auf den Kostenwerten der Straßenabschnitte basieren, die Bestandteil der Route sind.

Es ist eine Weiterbildung der Erfindung, dass zweite Kostenelemente auf einer Nutzungshistorie basieren. Zweite Kostenelemente beschreiben beispielsweise wann, durch wen, wie oft, mit welchem Zielort, mit welchem Startort und/oder wie (wie schnell, mit welchem Durchschnittsverbrauch) der zugehörige Straßenabschnitt benützt oder befahren wurde. Zweite Kostenelemente können kraftfahrzeugspezifisch, kraftfahrzeugherstellerspezifisch, nutzerspezifisch und/oder kraftfahrzeugmodellspezifisch ermittelt und/oder abgespeichert sein. Beispielsweise wird einem zweiten Kostenelement bei jedem Befahren des zugehörigen Straßenabschnittes ein negativer Wert hinzugefügt. Zweite Kostenelemente können in Ausführungsvarianten beispielsweise zielortspezifisch ermittelt, abgespeichert und zur Berechnung einer Route oder zur Berechnung von Gesamtkosten verwendet werden.

Es ist eine andere Weiterbildung der Erfindung, dass, insbesondere im Durchschnitt, die ersten Straßenabschnitte näher am Routenstartpunkt und/oder näher am Routenzielpunkt liegen als die zweiten Straßenabschnitte.

Dadurch wird erreicht, dass gerade für die Straßenabschnitte zweite Kostenelemente berücksichtigt werden, die ein Nutzer häufig aufgrund seiner Ortskenntnis am Start- oder Zielort abweichend von einer konventionell berechneten Route befährt. Der mit der Berücksichtigung zweiter Kostenelemente verbundene erhöhte Rechenaufwand wird dadurch gezielt dafür eingesetzt, nur oder bevorzugt für die Routenabschnitte Nutzungsgewohnheiten zu berücksichtigen, bei denen der Nutzerwunsch mit großer Wahrscheinlichkeit von einer konventionell berechneten Route abweicht.

Zweite Kostenelemente ändern sich vorzugsweise über die Zeit abhängig vom Nutzerverhalten. Daher werden vorzugsweise Kostenwerte im Zuge, insbesondere vor oder während der Berechnung einer Route oder der Berechnung der Gesamtkosten, neu berechnet und abgespeichert. Hat sich das entsprechende zweite Kostenelement seit der letzten Berechnung des Kostenwertes nicht geändert, wird zur Berechnung einer neuen Route oder neuer Gesamtkosten der Kostenwert des entsprechenden Straßenabschnittes vorzugsweise nicht neu berechnet, sondern der abgespeicherte Kostenwert verwendet. Dadurch wird stets das aktuelle Nutzerverhalten berücksichtigt und gleichzeitig der Rechenaufwand reduziert.

Es ist eine Weiterbildung der Erfindung, dass zweite Kostenelemente in einer zweiten Speichereinrichtung abgespeichert sind oder werden. Eine zweite Speichereinrichtung ist beispielsweise ein fest verbauter Bestandteil des Navigationssystems, des Fahrzeugs oder der Rechnereinrichtung. Insbesondere ist die zweite Speichereinrichtung vorzugsweise unabhängig von der Speichereinrichtung für die elektronische Straßenkarte gebildet. Dies erleichtert eine nutzerspezifische oder kraftfahrzeugspezifische Speicherung und Nutzung zweiter Kostenelemente. Es liegt aber auch im Rahmen der Erfindung, dass die erste Speichereinrichtung mit der zweiten Speichereinrichtung identisch ist.

Es ist eine andere Weiterbildung der Erfindung, dass eine Route berechnet wird, bei der die Summe der Kostenwerte der die Route bestimmenden Straßenabschnitte minimal ist.

Im Folgenden wird die Erfindung anhand von Beispielen näher erläutert:

Es wird von einem an sich bekannten Navigationssystem ausgegangen. Das Navigationssystem hat über eine Schnittstelle Zugriff auf eine erste Speichereinrichtung, auf der eine elektronische Straßenkarte abgespeichert ist.

Eine zweite Speichereinrichtung ist Teil des Navigationssystems. Abhängig von der Nutzung des Navigationssystems oder eines Kraftfahrzeuges, in dem das Navigationssystem genützt wird, werden in der zweiten Speichereinrichtung zweite Kostenelemente abgespeichert, die jeweils einem Straßenabschnitt zugeordnet sind.

Ein zweites Kostenelement kann beispielsweise dadurch bestimmt sein, wie oft der zugehörige Straßenabschnitt in der Vergangenheit befahren wurde. Ein zweites Kostenelement kann beispielsweise auch dadurch bestimmt sein, wie oft der zugehörige Straßenabschnitt befahren wurde auf dem Weg zu einem bestimmten Fahrziel. Je öfter der Straßenabschnitt befahren wurde, desto geringer (oder negativer) der Einfluss des entsprechenden zweiten Kostenelementes auf einen Kostenwert, der dem zugehörigen Straßenabschnitt zugeordnet ist oder wird, wenn die Gesamtkosten einer Route oder eine Route berechnet wird.

Das zweite Kostenelement kann dabei je nach Ausführungsvariante beispielsweise zielortspezifisch ermittelt sein, startortspezifisch ermittelt sein, nutzerspezifisch ermittelt sein, wochentagspezifisch ermittelt sein und/oder tageszeitspezifisch ermittelt sein.

Beispielsweise werden einem Straßenabschnitt bei einer zielortspezifischen Ermittlung des zweiten Kostenelementes mehrere zweite Kostenelemente zugeordnet abgespeichert: Für jeden Zielort, der beim Befahren eines Straßenabschnittes gerade eingestellt oder ausgewählt war, ein zweites Kostenelement. Zur Berechnung eines Kostenwertes für einen Straßenabschnitt wird dann automatisch das zweite Kostenelement verwendet, das dem momentan ausgewählten Zielort entspricht.

Im Rahmen der an sich bekannten Berechnung einer optimalen Route (Dijkstra Algorithmus; A*-Algorithmus oder bidirektionale Suche) oder der Gesamtkosten einer Route werden beispielsweise die Kostenwerte der Straßenabschnitte einer Route addiert. Dazu werden die ersten Kostenelemente aller Straßenabschnitte der Route aus der ersten Speichereinrichtung gelesen und durch die Rechnereinrichtung des Navigationssystems bei der Bestimmung von Kostenwerten für die Straßenabschnitte verwendet.

Gemäß der Erfindung werden zweite Kostenelemente nur für solche Straßenabschnitte aus der zweiten Speichereinrichtung gelesen, die beispielsweise in einem vorgegebenen örtlichen Verhältnis zu Start- und/oder Zielpunkt der Route stehen.

Beispielsweise werden zweite Kostenelemente nur für solche Straßenabschnitte aus der zweiten Speichereinrichtung gelesen, die innerhalb eines vorgegebenen örtlichen Umkreises (beispielsweise mit einem Radius von 5 oder 10 km) um Start- und/oder Zielpunkt der Route liegen. Nur die zweiten Kostenelemente dieser Straßenabschnitte werden durch die Rechnereinrichtung des Navigationssystems bei der Bestimmung von Kostenwerten für diese Straßenabschnitte verwendet. Durch die Einbeziehung der zweiten Kostenelemente wird der eigentlich durch das entsprechende erste Kostenelement bestimmte Kostenwert eines Straßenabschnittes reduziert, indem beispielsweise ein positives zweites Kostenelement vom ersten Kostenelement abgezogen wird, ein negatives zweites Kostenelement zum ersten Kostenelement addiert wird oder das erste Kostenelement durch ein zweites Kostenelement geteilt wird.

## Patentansprüche

1. Navigationssystem
- mit einer Schnittstelle zum Zugriff auf eine Speichereinrichtung, auf welcher eine elektronische Straßenkarte abgespeichert ist mit einer Vielzahl von Straßenabschnitten, denen jeweils zumindest ein erstes Kostenelement zugeordnet ist, und
- mit einer Rechnereinrichtung, die derart ausgeführt ist,
- dass zumindest einem Teil der Straßenabschnitte zumindest ein zweites Kostenelement zugeordnet ist oder wird,
- dass zur Berechnung einer Route den Straßenabschnitten jeweils ein Kostenwert zugeordnet ist oder wird, wobei die Berechnung des Kostenwertes für erste Straßenabschnitte jeweils auf dem ersten und dem zweiten Kostenelement basiert und für zweite Straßenabschnitte jeweils auf dem ersten und nicht auf dem zweiten Kostenelement basiert,
**dadurch gekennzeichnet, dass**
die Anzahl oder der Anteil der ersten Straßenabschnitte abhängig von der Rechnereinrichtungsauslastung variiert wird.

2. Navigationssystem nach Anspruch 1, bei dem die Rechnereinrichtung derart ausgeführt ist, dass zweite Kostenelemente auf einer Nutzungshistorie basieren, kraftfahrzeugspezifisch ermittelt und/oder abgespeichert sind, kraftfahrzeugherstellerspezifisch ermittelt und/oder abgespeichert sind, nutzerspezifisch ermittelt und/oder abgespeichert sind oder kraftfahrzeugmodellspezifisch ermittelt und/oder abgespeichert sind.

3. Navigationssystem nach einem der vorhergehenden Ansprüche,
bei dem insbesondere im Durchschnitt die ersten Straßenabschnitte näher am Routenstartpunkt oder näher am Routenzielpunkt liegen als die zweiten Straßenabschnitte.

4. Navigationssystem nach einem der vorhergehenden Ansprüche,
bei dem die Rechnereinrichtung derart ausgeführt ist, dass Kostenwerte im Zuge der Berechnung der Route berechnet werden und abgespeichert werden.

5. Navigationssystem nach einem der vorhergehenden Ansprüche,
bei dem die Rechnereinrichtung derart ausgeführt ist, dass zweite Kostenelemente in einer zweiten Speichereinrichtung abgespeichert sind oder werden.

6. Navigationssystem nach einem der vorhergehenden Ansprüche,
bei dem die Rechnereinrichtung derart ausgeführt ist, dass eine Route berechnet wird, bei der die Summe der Kostenwerte der die Route bestimmenden Straßenabschnitte minimal ist.

7. Verfahren zum Berechnen von Gesamtkosten einer Route durch eine Rechnereinrichtung eines Navigationssystems,
- bei dem den die Route bestimmenden Straßenabschnitten jeweils ein erstes und zumindest teilweise jeweils ein zweites Kostenelement zugeordnet ist,
- bei dem den Straßenabschnitten jeweils ein Kostenwert zugeordnet ist oder wird, dessen Berechnung für erste Straßenabschnitte jeweils auf einem ersten und einem zweiten Kostenelement basiert und für zweite Straßenabschnitte jeweils auf dem ersten und nicht auf dem zweiten Kostenelement basiert,
- bei dem die Gesamtkosten der Route auf den Kostenwerten der Straßenabschnitte basieren, die Bestandteil der Route sind, **dadurch gekennzeichnet, dass** die Anzahl oder der Anteil der ersten Straßenabschnitte abhängig von der Rechnereinrichtungsauslastung variiert wird.

## Claims

1. A navigation system
- comprising an interface for accessing a memory unit, on which an electronic road map is stored with a plurality of road portions, which are each assigned at least one first cost element, and
- comprising a computing unit, which is designed in such a way that
- at least some of the road portions are, or will be assigned a second cost element,
- in order to calculate a route, each of the road portions is, or will be assigned a cost value, wherein the calculation of the cost value for first road portions is based in each case on the first and the second cost element and for second road portions is based in each case on the first cost element and not on the second cost element,
**characterised in that**
the number or proportion of the first road portions is varied depending on the workload of the computing unit.

2. A navigation system according to claim 1,
wherein the computing unit is designed in such a way that second cost elements are based on a usage history, are determined and/or stored in a motor vehicle-specific manner, are determined and/or stored in a motor vehicle manufacturer-specific manner, are determined and/or stored in a user-specific manner, or are determined and/or stored in a motor vehicle model-specific manner.

3. A navigation system according to either one of the preceding claims,
wherein the first road portions, more especially on average, are closer to the route start point or closer to the route destination point than the second road portions.

4. A navigation system according to any one of the preceding claims,
wherein the computing unit is designed in such a way that cost values are calculated and stored during the course of the calculation of the route.

5. A navigation system according to any one of the preceding claims, in which the computing unit is designed in such a way that second cost elements are, or will be stored in a second memory unit.

6. A navigation system according to any one of the preceding claims,
wherein the computing unit is designed in such a way that a route is calculated for which the sum of the cost values of the road portions determining the route is minimal.

7. A method for calculating total costs of a route by a computing unit of a navigation system,
- wherein the road portions determining the route are each assigned a first and at least in part a second cost element,
- wherein each of the road portions is, or will be assigned a cost value, the calculation of which for first road portions is based in each case on a first and a second cost element and for second road portions is based in each case on the first cost element and not on the second cost element,
- wherein the total costs of the route are based on the cost values of the road portions which are part of the route, **characterised in that** the number or the proportion of the first road portions is varied depending on the workload of the computing unit.

## Revendications

1. Système de navigation comprenant :
- un interface permettant d'accéder à un dispositif de mémoire sur lequel est enregistrée une carte routière électronique ayant un ensemble de segments de route auxquels est respectivement associé au moins un premier élément de coût, et
- un dispositif de calcul réalisé de sorte :
- qu'à au moins une partie des segments de route soit associé au moins un second élément de coût,
- que pour calculer un itinéraire, une valeur de coût soit respectivement associée aux segments de route, le calcul de la valeur de coût étant respectivement basé pour des premiers segments de route sur le premier et sur le second éléments de coût et étant respectivement basé pour des seconds segments de route sur le premier élément de coût mais pas sur le second élément de coût,
**caractérisé en ce que**
le nombre ou la proportion des premiers segments de route varie en fonction de la charge du dispositif de calcul.

2. Système de navigation conforme à la revendication 1,
dans lequel le dispositif de calcul est réalisé de sorte que des seconds éléments de coût se basent sur un historique d'utilisation soient déterminés et/ou enregistrés de manière spécifique à un véhicule, soient déterminés et/ou enregistrés, de manière spécifique au fabricant du véhicule, soient déterminés et/ou enregistrés de manière spécifique à l'utilisateur ou soient déterminés et/ou enregistrés, de manière spécifique au modèle de véhicule.

3. Système de navigation conforme à l'une des revendications précédentes,
dans lequel en particulier en moyenne, les premiers segments de route sont plus proches du point de départ de l'itinéraire ou du point de destination de l'itinéraire que les seconds segments de route.

4. Système de navigation conforme à l'une des revendications précédentes,
dans lequel le dispositif de calcul est réalisé pour permettre de calculer et d'enregistrer des valeurs de coût au cours du calcul de l'itinéraire.

5. Système de navigation conforme à l'une des revendications précédentes,
dans lequel le dispositif de calcul est réalisé pour permettre d'enregistrer des seconds éléments de coût dans un second dispositif de mémoire.

6. Système de navigation conforme à l'une des revendications précédentes,
dans lequel le dispositif de calcul est réalisé pour permettre de calculer l'itinéraire pour lequel la somme des valeurs de coût des segments de route déterminant l'itinéraire est minimum.

7. Procédé de calcul du coût total d'un itinéraire par un dispositif de calcul d'un système de navigation selon lequel :
- aux segments de route déterminant l'itinéraire est respectivement associé un premier et au moins en partie un second élément de coût,
- aux segments de route est respectivement associée une valeur de coût dont le calcul est respectivement basé pour des premiers segments de route sur un premier élément de coût et sur un second élément de coût et pour des seconds segments de route sur le premier élément de coût mais pas sur le second élément de coût,
- les coûts totaux de l'itinéraire sont basés sur les valeurs de coût, des segments de route qui sont des composants de l'itinéraire,
**caractérisé en ce que**
le nombre ou la proportion des premiers segments de route varie en fonction de la charge du dispositif de calcul.
